# EUROPÄISCHE PATENTSCHRIFT

(11) **EP 3 175 677 B1**
(45) Veröffentlichungstag und Bekanntmachung des Hinweises auf die Patenterteilung: **23.09.2020**
(21) Anmeldenummer: 15747111.1
(22) Anmeldetag: 21.07.2015
(51) Int. Cl.: H05B 45/382

(54) **AKTIVE SCHALTUNG ZUR ERFASSUNG EINES LEUCHTMITTEL-STROMS**
ACTIVE CIRCUIT FOR MEASURING THE CURRENT OF AN ILLUMINANT
CIRCUIT ACTIF DESTINÉ À LA DÉTECTION DU COURANT D'UNE DIODE ÉLECTROLUMINESCENTE

(30) Priorität: 28.07.2014 DE 102014214746
(43) Veröffentlichungstag der Anmeldung: 07.06.2017
(73) Patentinhaber: Tridonic GmbH & Co KG, 6851 Dornbirn (AT)
(72) Erfinder: MARTE, Patrick, A-6840 Götzis (AT); LOCHMANN, Frank, 88147 Esseratsweiler (DE)
(74) Vertreter: Rupp, Christian
(86) Internationale Anmeldenummer: PCT/EP2015/066630
(87) Internationale Veröffentlichungsnummer: WO 2016/016044

(56) Entgegenhaltungen:
- WO-A1-2012/106967
- DE-A1-102013 224 749
- US-A1- 2012 248 998

## Beschreibung

Die Erfindung bezieht sich auf eine aktive Schaltung, insbesondere eine Treiberschaltung, zur Erfassung eines Stroms durch eine Leuchtmittelstrecke mit wenigstens einer LED. Insbesondere bezieht sich die Erfindung auf eine aktive Schaltung, die durch eine potentialtrennende und/oder galvanisch isolierende Barriere (beispielsweise eine Sicherheits-Kleinspannungsbarriere (SELV-Barriere)) in eine von einer Versorgungsspannung aus versorgte Primärseite und eine die Leuchtmittelstrecke versorgende Sekundärseite aufgeteilt ist.

Bekannt ist es, dass bei solchen Schaltungen von der Primärseite der Schaltung zu der Sekundärseite der Schaltung eine Energieübertragung stattfindet. Insbesondere erfolgt die Übertragung von der Primärseite zu der Sekundärseite der Schaltung über die Barriere hinweg mittels eines Wandlers, insbesondere eines Transformators, der mittels einer elektromagnetischen Kopplung eine Spannung bzw. einen Strom auf der Sekundärseite induziert. Somit ist es möglich, über die Barriere hinweg die Sekundärseite zu versorgen.

Zur Ermittlung des Leuchtmittelstroms durch das Leuchtmittel, bzw. die Leuchtmittelstrecke, der zur Regelung der Leuchtmittelhelligkeit verwendet werden kann, ist es bekannt, eine Ermittlung des Leuchtmittelstroms auf der Sekundärseite durchzuführen. Dies ist z.B. in der WO 2014/060899 gezeigt. Bekannt ist zudem, dass, wie exemplarisch auch in der Fig. 1 gezeigt, eine Steuerschaltung SE eine Schaltereinheit S mit einem getakteten Schalter direkt oder indirekt ansteuert, z.B. über eine Treibereinheit.

Die Schaltereinheit S kann beispielsweise einen einzelnen getakteten Schalter oder mehrere getaktete Schalter aufweisen. So kann die Schaltereinheit S insbesondere einen Wechselrichter mit einem Hochpotential ("high-side")-Schalter und einem Niederpotential ("low-side")-Schalter umfassen.

Ausgehend von der Schaltereinheit S wird dann eine Wandlerwicklung L2_1 (Induktivität, Spule) versorgt. Diese Wandlerwicklung L2_1 kann dabei Teil einer LLC-Schaltung sein und beispielsweise von einem Mittelpunkt des Wechselrichters gespeist werden. Insbesondere wird also ein Wandler (z.B. Resonanzwandler, LLC-Wandler) gespeist, von dem ausgehend die Sekundärseite der Schaltung durch elektromagnetische Kopplung der primärseitigen Wandlerwicklung L2_1 und der sekundärseitigen Wandlerwicklung L2_2, L2_3 (hier als separate Wicklungen L2_2, L2_3 dargestellt) über eine Barriere B hinweg gespeist wird.

Über die Dioden D1 und D2, die einen Gleichrichter bilden, wird den LED-Anschlüssen LED+ und LED- eine über einen Glättungskondensator C2 geglättete Gleichspannung zum Betrieb des Leuchtmittels zugeführt.

Eine Hilfswicklung Lh ist mit einer Erfassungsschaltung E auf der Sekundärseite der Schaltung vorgesehen, wobei die Hilfswicklung Lh elektromagnetisch mit der primärseitigen Wicklung L2_1 gekoppelt ist. Die Erfassungsschaltung E erfasst dann mittels der Hilfswicklung Lh einen auf der Sekundärseite der Schaltung induzierten Strom, bzw. einen diesen wiedergebenden Parameter. Der entsprechende den Strom wiedergebende Parameter wird dabei durch die Erfassungsschaltung E ermittelt und über ein Überbrückungselement X, das beispielsweise ein Optokoppler oder ein weiterer Transformator sein kann, über die Barriere B zu der Steuereinheit SE zurück geführt. Die Steuereinheit SE kann den Parameter dann als Ist-Wert für den Strom durch das Leuchtmittel auswerten, und zur Regelung des Leuchtmittels verwenden. Dabei kann die Steuereinheit SE insbesondere den Ist-Wert für den Strom mit einem Sollwert vergleichen und entsprechend die Schaltereinheit S ansteuern.

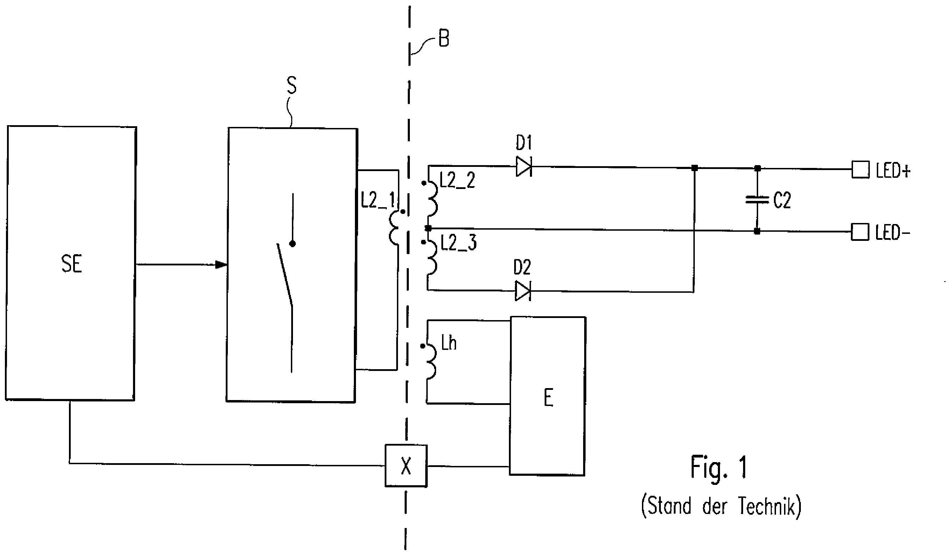

Die in Fig. 1 dargestellte Schaltung hat indessen den Nachteil, dass einerseits die Erfassungsschaltung E auf der Sekundärseite der Schaltung vorgesehen sein muss, und weiter ein Überbrückungselement X benötigt wird, um die Barriere B zu überbrücken, was zu relativ hohen Schaltungskosten und komplizierten Schaltungsanordnungen führt.

Die Druckschrift DE 102013224749 A1 schlägt einen primär getakteten, potentialgetrennten Wandler vor, mit wenigstens einem Schalter, einem potentialtrennenden Lasttransformator, einem Strommesstransformator zum Messen eines Stroms auf der Sekundärseite des Lasttransformators, und einer integrierten Steuerschaltung zum Steuern des wenigstens einen Schalters abhängig von der Sekundärseite des Lasttransformators, wobei die Primärseite des Strommesstransformators auf der Sekundärseite des Lasttransformators angeordnet ist und die Sekundärseite des Strommesstransformators den gemessenen Strom als AC-Signal der integrierten Steuerschaltung zuführt, und die integrierte Steuerschaltung eine Stromquelle und einen Knoten (K) aufweist, der von der Stromquelle und dem AC-Signal gespeist wird.

Die Druckschrift US2012/0248998A1 offenbart eine Schaltung bzw. ein Verfahren nach der Präambel des Anspruchs 1 bzw. 9.

Es ist daher ein Ziel der Erfindung, eine Schaltung bereitzustellen, die eine primärseitige Erfassung eines den Strom durch das Leuchtmittel wiedergebenden Parameters ermöglicht. Insbesondere ist es die Aufgabe der Erfindung, eine Möglichkeit bereitzustellen, auf der Primärseite der Schaltung einen den Strom durch das Leuchtmittel wiedergebenden Parameter zu erfassen und dabei Erfassungsfehler zu vermeiden.

Eine Lösung für diese Aufgabe wird im Folgenden beschrieben und durch die Vorrichtung nach Anspruch 1 sowie das Verfahren nach Anspruch 9 gelöst. Weiterbildungen der Erfindung sind Gegenstand der abhängigen Ansprüche.

In einem ersten Aspekt der Erfindung wird eine Schaltung, insbesondere eine Treiberschaltung zum Betreiben eines Leuchtmittels, vorzugsweise wenigstens einer LED, bereitgestellt, aufweisend einen potentialgetrennten, primärseitig von einer Steuereinheit mittels wenigstens einer angesteuerten Schaltereinheit getakteten Wandler, der einen Gleichrichter speist, von dem ausgehend das Leuchtmittel versorgbar ist. Eine Erfassungsschaltung zur indirekten Erfassung des Stroms auf der Sekundärseite des Wandlers weist einen Transformator mit wenigstens einer primärseitigen Wicklung auf.

Die Erfassungsschaltung kann einen Erfassungsgleichrichter, vorzugsweise einen aktiven Erfassungsgleichrichter, aufweisen, der als Polaritätswandler ausgebildet sein kann.

Zu der Steuereinheit kann von einem Ausgang der Erfassungsschaltung ein den Strom durch das Leuchtmittel wiedergebender Parameter zurückgeführt sein. Insbesondere kann der Ausgang direkt oder indirekt mit einem Messeingang der Steuereinheit verbunden sein.

Die Schaltereinheit kann ein Halbbrücken- oder Vollbrückenwechselrichter sein.

Die wenigstens eine primärseitige Wicklung kann insbesondere Teil eines Resonanzwandlers, einer LLC-Schaltung, eines Sperrwandlers (Flyback-Wandler), eines Gegentaktflusswandlers, eines Aufwärts- (Boost-) oder eines Abwärtswandlers (Buck-Wandler) sein.

Die Steuereinheit kann Gleichrichterschalter des aktiven Gleichrichters der Erfassungsschaltung in Abhängigkeit von der Ansteuerung der Schaltereinheit steuern.

Die Schaltereinheit kann wenigstens einen Schalter, insbesondere einen Transistor, FET oder MOSFET aufweisen.

Die Steuereinheit kann die Sekundärwicklung des Transformators durch ansteuern eines ersten Gleichrichterschalters synchron mit einem Wechselrichterschalter oder durch ansteuern eines zweiten Gleichrichterschalters synchron mit einem anderen Wechselrichterschalter mit Masse verbinden.

Der den Strom durch das Leuchtmittel wiedergebende Parameter kann ein Spannungswert sein, der an einem Ausgang einer Integrationsschaltung der Erfassungsschaltung ausgegeben wird.

Der erste oder der zweite Gleichrichterschalter können durch die Schaltereinheit durch ein Ansteuersignal angesteuert werden und der andrere Gleichrichterschalter kann durch ein invertiertes Ansteuersignal von der Schaltereinheit angesteuert wird.

In einem weiteren Aspekt stellt die Erfindung ein Verfahren zur Erfassung eines den Strom durch ein Leuchtmittel, vorzugsweise wenigstens eine LED, wiedergebenden Parameters, bereit, wobei ein potentialgetrennter, primärseitig von einer Steuereinheit mittels wenigstens einer Schaltereinheit angesteuerter getakteter Wandler einen Gleichrichter speist, von dem ausgehend das Leuchtmittel versorgt wird. Eine Erfassungsschaltung kann indirekt auf der Sekundärseite des Wandlers an einem Transformator mit wenigstens einer primärseitigen Wicklung auf der Sekundärseite des Wandlers einen Strom erfassen.

Die Erfindung wird auch mit Bezug auf die Figuren beschrieben. Dabei zeigen:
- Fig. 1: schematisch eine bekannte Ausführungsform nach dem Stand der Technik.
- Fig. 2: schematisch eine erste Ausführungsform nach der Erfindung.
- Fig. 3: exemplarisch eine detailliertere Schaltungsanordnung gemäß der ersten Ausführungsform der Erfindung.
- Fig. 4: exemplarische Kurven erfasster Parameter.
- Fig. 5: schematisch eine zweite erfindungsgemäße Ausführungsform.
- Fig. 6: exemplarisch eine detailliertere Schaltungsanordnung gemäß der zweiten Ausführungsform der Erfindung.
- Fig. 7: Zustände von Schaltungsteilen bei bestimmter Ansteuerung.

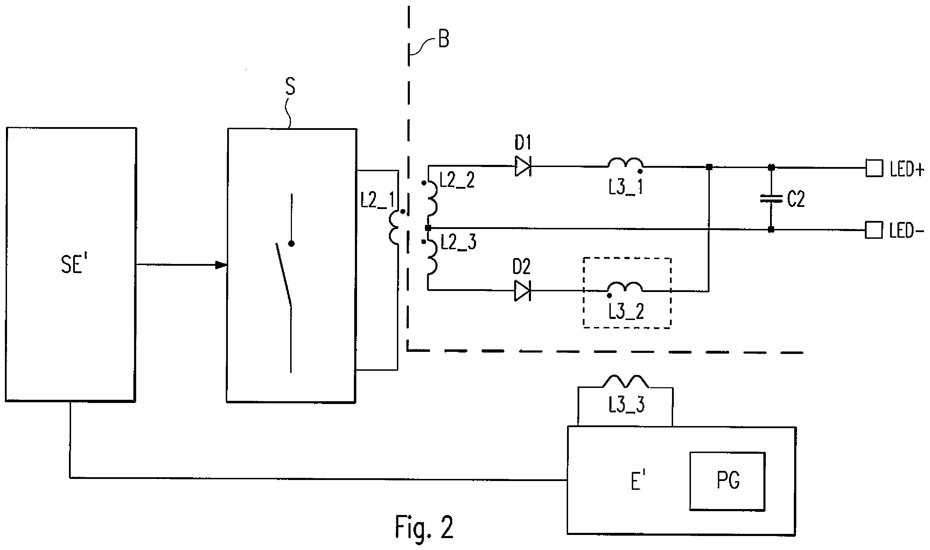

Fig. 2 zeigt nun eine erste Ausführungsform der erfinderischen Schaltung, bei der gleiche Bezugszeichen im Wesentlichen gleiche Schaltungsteile bezeichnen wie in Fig. 1. Wie aus Fig. 2 ersichtlich, ist in Serie mit wenigstens einer sekundärseitigen Wandlerwicklung L2_2, L2_3 (es können auch, wie dargestellt zwei Wandlerwicklungen vorgesehen sein, die vorzugsweise miteinander magentische gekoppelt sind) eine Diode verbunden die wiederum mit einer Primärwicklung L3_1 eines Transformators in Serie Verbunden ist. Die Primärwicklung L3_1 des Transformators und ist dabei in dem Versorgungspfad des Leuchtmittelanschlusses LED+ angeordnet.

Die Primärwicklung L3_1 des Transformators ist mit einer Sekundärwicklung L3_3 des Transformators elektromagnetisch gekoppelt.

In Fig. 2 ist in einem gestrichelten Rahmen exemplarisch eine, mit einer Diode D2 in Serie geschaltete, primärseitige weitere Primärwicklung L3_2 des Transformators gezeigt, die optional vorgesehen sein kann.

Die Sekundärwicklung L3_3 des Transformators ist dabei mit einer Erfassungsschaltung E' verbunden, die einen passiven Erfassungsgleichrichter PG aufweist. Dieser richtet die, insbesondere Wechselweise durch die Primärwicklungen L3_1, L3_2 des Transformators übertragene Spannung zu einer Gleichspannung gleich.

An einem Ausgang des passiven Erfassungsgleichrichter PG kann somit eine Erfassung des den Strom durch das Leuchtmittel wiedergebenden Parameters, z.B. über einen Strommesswiderstand, erfolgen. Der Parameter ist wiederrum einer Steuereinheit SE' zurückgeführt, die ihn vorzugsweise als Ist-Wert für den Strom durch das Leuchtmittel (nicht gezeigt) auswertet und eine entsprechende Regelung durchführt. Zum Anschluss des Leuchtmittels, das vorzugsweise wenigstens eine LED aufweist, sind, wie in Fig. 1, die Anschlüsse (Terminals) LED- und LED+ vorgesehen.

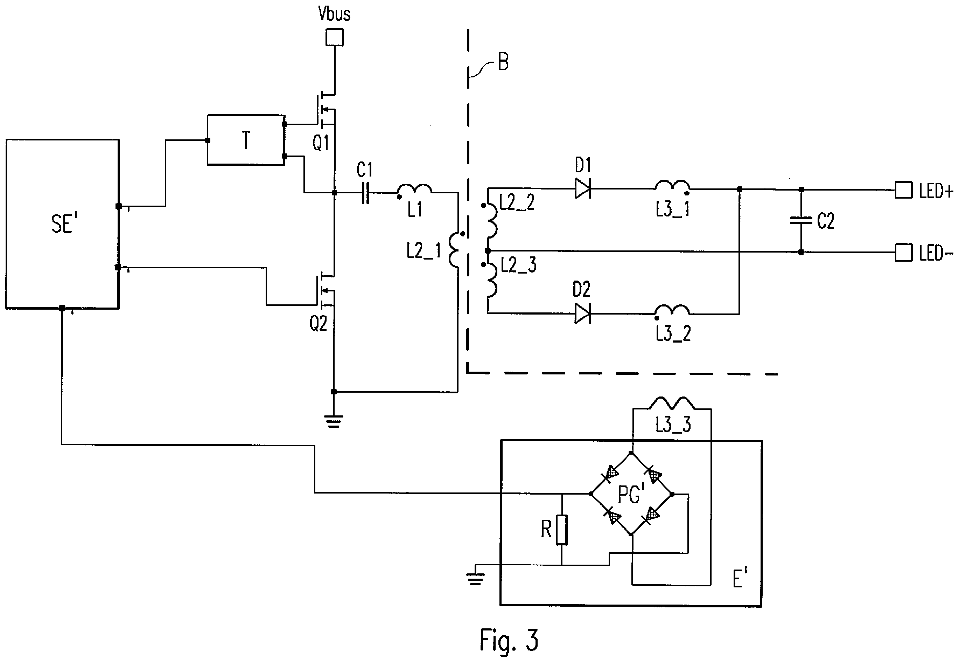

Eine exemplarische Ausgestaltung der Ausführungsform von Fig. 2 ist in Fig. 3 gezeigt. Auch hier bezeichnen gleiche Bezugszeichen gleiche Schaltungsteile wie in Figs. 1 und 2.

Insbesondere ist in Fig. 3 eine Steuereinheit SE' vorgesehen, die einen Wechselrichter mit einem ersten Wechselrichterschalter Q1 und einem zweiten Wechselrichterschalter Q2 ansteuert. Der erste Wechselrichterschalter Q1 ist hier ein "high-side-switch", also der Schalter "über" der Last bzw. der potentialhöhere Schalter, und wird über einen Treiber T angesteuert, während der zweite Wechselrichterschalter Q2 einen "low-side-switch" (Schalter "unter" der Last bzw. potentialniedrigere Schalter) darstellt.

Ausgehend von einem Mittenpunkt zwischen dem ersten und zweiten Wechselrichterschalter Q1, Q2 der dargestellten Wechselrichterhalbbrücke wird ein Resonanzwandler (hier LLC-Wandler) mit einer Kapazität C1, einer Induktivität L1 und einer primären Wandlerwicklung L2_1 gespeist.

Die Sekundärseite der Schaltung ist im Wesentlichen identisch zu der aus Fig. 2. Auch hier kann eine der Primärwicklungen L3_1, L3_2 des Transformators optional vorgesehen sein.

Weiter ist der passive Erfassungsgleichrichter PG' als Teil der Erfassungsschaltung E' auf der Primärseite der Schaltung als Dioden-Vollbrücke ausgebildet und die Steuereinheit SE' erfasst an seinem Ausgang einen den Strom durch das Leuchtmittel wiedergebenden Parameter über einen Messwiderstand R.

Mit den Anordnungen aus den Fig. 2 und Fig. 3 kann nun auf der Primärseite der Schaltung der den Strom durch das Leuchtmittel wiedergebende Parameter erfasst werden. Da insbesondere beide dem Leuchtmittel zugeführten Halbwellen transformatorisch übertragen werden, können auch entsprechende Stromwerte für beide Halbwellen erfasst werden.

Problematisch ist hierbei jedoch, dass die typischerweise auf der Sekundärseite der Schaltung als Gleichrichter eingesetzten Dioden D1, D2 bei hohen Temperaturen einen "Reverse-Strom" aufweisen, d.h. dass durch die Dioden D1, D2 kein unmittelbares Abschalten erfolgt, sondern ein Strom durch die Dioden D1, D2 des Gleichrichters in Sperrrichtung der Dioden D1, D2 fließt.

Aufgrund der transformatorischen Auskopplung und der Gleichrichtung durch den passiven Erfassungsgleichrichter PG' ergibt sich ein Fehlerpotenzial, das besonders bei hohen Temperaturen das von der Steuereinheit SE' erfasste Signal stark stört.

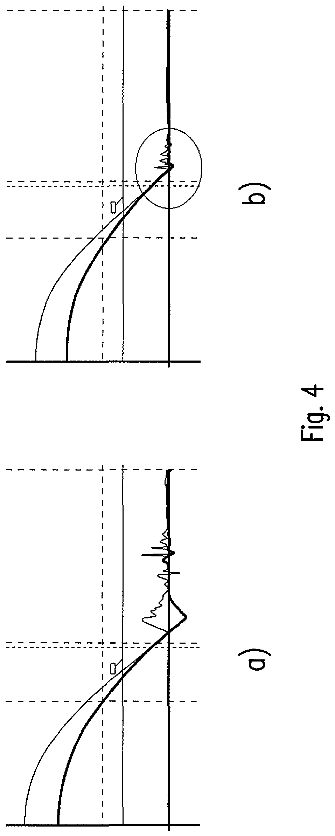

Dies wird aus den exemplarisch in den Figs. 4a und 4b gezeigten Kurven deutlich, wobei die Fig. 4a einen Kurvenverlauf bei hohen Temperaturen illustriert. In der Darstellung stellt die schwarze, von links nach rechts zunächst abfallende Kurve, einen Stromverlauf durch die Diode D1 dar, während die graue, von links nach rechts abfallende Kurve, das an dem Messwiderstand R erfasste Signal darstellt.

Der passive Erfassungsgleichrichter PG' ist jedoch nicht in der Lage den negativen "Reverse-Strom" der Diode korrekt auszugeben, was zu einer Verschiebung des gemessenen Signals führt, dass an den Messwiderstand R erfasst wird.

In Fig. 4b sind entsprechende Kurven für niedrigere Temperaturen gezeigt. Aus Fig. 4b wird deutlich, dass je kleiner die Temperatur ist, desto geringer ist auch der Einfluss des in Sperrrichtung fließenden "Reverse-Stroms" an der Diode D1. Somit ist der Erfassungsfehler bei niedrigen Temperaturen reduziert. Der erfasste und fälschlicherweise positiv gemessene "Reverse-Strom" ist bei den niedrigen Temperaturen viel geringer. Der entsprechende Bereich ist in Fig. 4b gekennzeichnet.

Es ist zu verstehen, dass sich ein entsprechender Signalverlauf auch für die Diode D2 ergeben kann, sodass sich eine entsprechende Fehleraddition für jede durch die wenigstens ein primäre Transformatorenwicklung L3_1, L3_2 in der sekundären Transformatorenwicklung L3_3 induzierte Halbwelle ergibt.

Weiter ist zu verstehen, dass neben einem LLC-Wandler, wie er in den Figs. 1 und 2 dargestellt ist, auch andere Wandler beispielsweise Flyback-Wandler, Buck- oder Boost-Wandler und insbesondere auch andere Topologien sonstiger getakteter, potenzial getrennter Wandler zum Einsatz kommen können. Insgesamt bezieht sich die Erfindung also auf die Erfassung des LED-Stroms wobei dieser Strom ausgehend von einer AC-Spannung ermittelt wird die mittels der Dioden D1, D2 gleichgerichtet wird. Eine Erfassung des LED-Stroms erfolgt also indirekt über den Transformator, der zwei Primärwicklungen L3_1 und L3_2 aufweist, die mit jeweils einer der Dioden D1, D2 in Serie geschaltet sind.

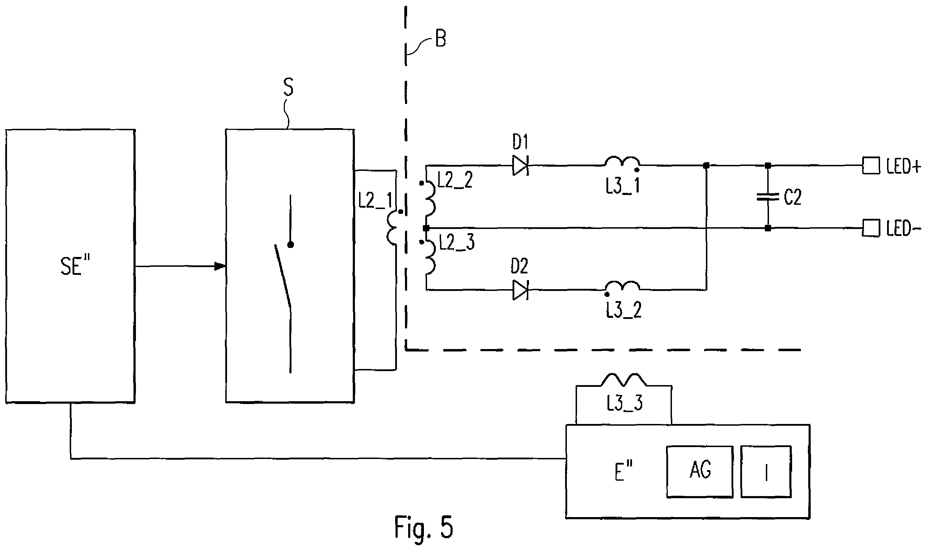

Die in Fig. 5 dargestellte Schaltung erlaubt nun eine Erfassung eines LED-Stroms auf der Primärseite der Schaltung bei gleichzeitiger Vermeidung der durch den "Reverse-Strom" hervorgerufenen Erfassungsfehler. Auch in Fig. 5 bezeichnen gleiche Bezugszeichen im Wesentlichen gleiche Elemente wie in den vorhergehenden Figs.

Im Vergleich zur Fig. 2 oder 3 ist der passive Erfassungsgleichrichter PG, PG' durch einen aktiven Erfassungsgleichrichter AG in einer Erfassungsschaltung E" ersetzt, der bspw. als Polaritätswandler ausgebildet sein kann Weiter weist die Erfassungsschaltung E" eine RC-Schaltung bzw. Integrationsschaltung I zur Ausgabe des den Strom durch das Leuchtmittel wiedergebenden Parameters an die Steuereinheit SE" auf. Insbesondere ist die Sekundärwicklung L3_3 des Transformators mit dem aktiven Gleichrichter AG verbunden, der vorzugsweise direkt mit der Schaltereinheit S (z.B. synchron) von der Steuereinheit SE" angesteuert wird.

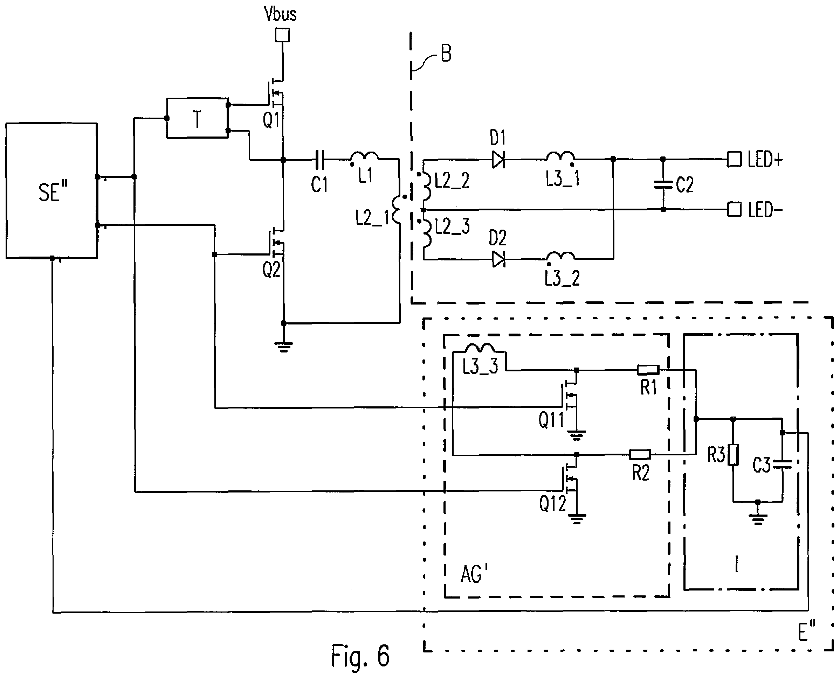

In Fig. 6 ist nun exemplarisch eine detailliertere Ausgestaltung der Erfinderischen Schaltung gezeigt. Die Sekundärwicklung L3_3 des Transformators ist hier mit zwei Gleichrichterschaltern Q11, Q12 verbunden, die vorzugsweise direkt mit der den Wechselrichterschaltern Q1, Q2 (z.B. synchron) der Wechselrichterhalbbrücke (bei Verwendung z.B. einer LLC-Topologie) wechselweise angesteuert werden.

Mittels der Transistoren Q11, Q12 wird wechselweise einer der beiden Anschlüsse der Sekundärwicklung L3_3 des Messtransformators auf Masse geführt. Somit wird die Spannung an der Sekundärwicklung L3_3 in sich ständig invertierender Weise über den Spannungsteiler R1/R3 bzw. R2/R3 abgegriffen. Die Widerstände R1, R2 sind vorzugsweise identisch gewählt.

Während der Totzeit, d.h. während der Zeitdauer, in der weder der Transistor Q11 noch der Transistor Q12 eingeschaltet ist, kann zwar kein Signal von der Sekundärwicklung L3_3 abgegriffen werden. Jedoch ist es bei korrektem Betrieb des Wandlers (z.B. LLC- oder Fly-back Wandler) so, das während dieser Zeitdauer auch kein Strom auf die Sekundärseite des Wandlers fließen soll.

Das Schalten der Gleichrichterschalter Q11, Q12 erfolgt also insbesondere synchron mit wenigstens einem Schalter der Schaltereinheit S. Bei Verwendung eines Fly-back Wandlers ist das eine Treibersignal zur Ansteuerung des zweiten Transistors beispielsweise Q12 ggf. durch Invertieren zu erzeugen.

Das Ausgangssignal der RC-Schaltung wird der Steuereinheit SE" zurückgeführt in der ein Regelalgorithmus implementiert ist. Dieses Rückführsignal wird als für den LED-Strom repräsentativer Wert ausgewertet und als Ist-Wert verglichen mit einem Soll-Wert. Die Steuergröße ist die Taktung des Schalters des LLC- oder Flyback-Wandlers (oder eines anderem primärseitig getakteten potential getrennten Wandlers).

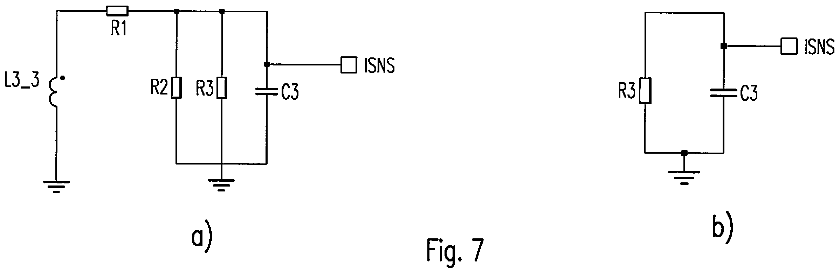

Die Figs. 7a und 7b zeigen Schaltungskonfigurationen bei bestimmten Schaltzuständen der Transistoren Q11, Q12. In Fig. 7a speist ein Spannungsteiler mit Widerständen R1, R2 (alternativ bei wechselseitiger Aktivierung der Transistoren Q11, Q12 mit Widerständen R1, R3) einen Kondensator C3 der RC-Schaltung I. Das tatsächlich der Steuerschaltung zurückgeführte Signal ist somit die Spannung an dem Speicherkondensator C3. Die Sekundärwicklung L3_3 des Transformators wird bei Schalten des Transistors Q11 (alternativ des Transistors Q12) mit Masse verbunden. Der durch die Steuereinheit SE" erfasste Strom ist somit positiv. Durch die RC-Schaltung I kann durch Mittelwertbildung mittels des Kondensators C3, des Widerstands R3 und des Wiederstands R1 oder R2 der parasitäre Reverse-Strom gemessen werden.

In der Totzeit entlädt sich der Kondensator C3, wie in Fig. 7b gezeigt, nicht über eine Parallelschaltung der Widerstände R1, R2 sondern nur über den Widerstand R3. In der Totzeit kann auch die Spannung an dem Kondensator C3 als Messsignal verwendet werden, allerdings erfolgt während der Totzeit kein Speisen (Laden) des Kondensators C3 ausgehend von der Sekundärwicklung L3_3 des Messtransformators.

Somit wird in der Ausführungsform nach Figs. 5 und 6 also an der Sekundärwicklung L3_3 ein alternierender Strom erfasst. Fließt ein Strom durch die Diode D1, so liegt ein positiver Strom vor, fließt ein Strom durch die Diode D2, so liegt ein negativer Strom vor. Das Schalten der Transistoren Q11 und Q12 wird dann wie die ein Polaritätswechseln an der Sekundärwicklung L3_3. Die Integrationsschaltung I (RC-Schaltung liefert dann einen Spannungswert, der mit dem Strom durch das Leuchtmittel Korreliert.

Es ist zu verstehen, dass die beschriebenen Schalter als Transistoren (z.B. FET, MOSFET, ...) ausgebildet sein können. Die Steuereinheit SE' , SE" kann z.B. als Microcontroller, IC oder ASIC ausgebildet sein.

## Patentansprüche

1. Treiberschaltung zum Betreiben eines Leuchtmittels, vorzugsweise wenigstens einer LED, wobei die Treiberschaltung einen potentialgetrennten, primärseitig von einer Steuereinheit (SE', SE") der Treiberschaltung mittels wenigstens einer Schaltereinheit (S) der Treiberschaltung angesteuerten, getakteten Wandler, aufweist, der einen Gleichrichter (D1, D2) der Treiberschaltung speist, von dem ausgehend das Leuchtmittel versorgbar ist, und die Treiberschaltung eine Erfassungsschaltung (E', E") zur indirekten Erfassung des Stroms auf der Sekundärseite des Wandlers aufweist, **dadurch gekennzeichnet, dass** die Erfassungsschaltung (E', E") zur indirekten Erfassung des Stroms auf der Sekundärseite des Wandlers einen Transformator (L3_1, L3_3) mit wenigstens einer auf der Sekundärseite des Wandlers angeordneten Primärwicklung (L3_1) aufweist, wobei die Erfassungsschaltung (E', E") einen an der Sekundärwicklung (L3_3) des Transformators gekoppelten aktiven Erfassungsgleichrichter (AG, AG') aufweist, wobei die Steuereinheit (SE', SE") Gleichrichterschalter (Q11, Q12) des aktiven Erfassungsgleichrichters (AG, AG') der Erfassungsschaltung (E', E") in Abhängigkeit von der Ansteuerung der Schaltereinheit (S) steuert.

2. Treiberschaltung nach Anspruch 1, wobei zu der Steuereinheit (SE', SE") von einem Ausgang der Erfassungsschaltung (E', E") ein den Strom durch das Leuchtmittel wiedergebender Parameter zurückgeführt ist, und insbesondere der Ausgang direkt oder indirekt mit einem Messeingang der Steuereinheit (SE', SE") verbunden ist.

3. Treiberschaltung nach einem der vorgehenden Ansprüche, wobei die Schaltereinheit (S) ein Halbbrücken- oder Vollbrückenwechselrichter ist.

4. Treiberschaltung nach einem der vorgehenden Ansprüche, wobei die wenigstens eine Primärwicklung (L3_1) Teil eines Resonanzwandlers, einer LLC-Schaltung, eines Sperrwandlers, eines Gegentaktflusswandlers, eines Aufwärts- oder eines Abwärtswandler ist.

5. Treiberschaltung nach einem der vorgehenden Ansprüche, wobei die Schaltereinheit (S) wenigstens einen Schalter, insbesondere einen Transistor, FET oder MOSFET aufweist.

6. Treiberschaltung nach einem der vorgehenden Ansprüche, wobei die Steuereinheit (SE', SE") die Sekundärwicklung (L3_3) des Transformators durch ansteuern eines ersten Gleichrichterschalters (Q11) synchron mit einem Wechselrichterschalter (Q2) oder durch ansteuern eines zweiten Gleichrichterschalters (Q12) synchron mit einem anderen Wechselrichterschalter (Q1) mit Masse verbindet.

7. Treiberschaltung nach Anspruch 2, wobei der den Strom durch das Leuchtmittel wiedergende Parameter ein Spannungswert ist, der an einem Ausgang einer Integrationsschaltung (I) der Erfassungsschaltung (E', E") ausgegeben wird.

8. Treiberschaltung nach einem der vorgehenden Ansprüche, wobei der erste oder der zweite Gleichrichterschalter (Q11/Q12) durch die Schaltereinheit (S) durch ein Ansteuersignal angesteuert wird und der andere Gleichrichterschalter (Q12/Q11) durch ein invertiertes Ansteuersignal von der Schaltereinheit (S) angesteuert wird.

9. Verfahren zur Erfassung eines den Strom durch ein Leuchtmittel, vorzugsweise wenigstens eine LED, wiedergebenden Parameters, wobei ein potentialgetrennter, primärseitig von einer Steuereinheit (SE', SE") mittels wenigstens einer Schaltereinheit (S) angesteuerter getakteter Wandler einen Gleichrichter (D1, D2) speist, von dem ausgehend das Leuchtmittel versorgt wird, und eine Erfassungsschaltung (E', E") indirekt auf der Sekundärseite des Wandlers einen Strom erfasst, **dadurch gekennzeichnet, dass** die Erfassungsschaltung (E', E") an einem Transformator (L3_1, L3_3) mit wenigstens einer Primärwicklung (L3_1) auf der Sekundärseite des Wandlers den Strom erfasst und einen an der Sekundärwicklung (L3_3) des Transformators (L3_1, L3_3) gekoppelten aktiven Erfassungsgleichrichter (AG, AG') aufweist, wobei die Steuereinheit (SE', SE") Gleichrichterschalter (Q11, Q12) des aktiven Erfassungsgleichrichters (AG, AG') der Erfassungsschaltung (E', E") in Abhängigkeit von der Ansteuerung der Schaltereinheit (S) steuert.

## Claims

1. Driver circuit for driving an illuminant, preferably at least one LED, wherein the driver circuit comprises an isolated, clocked converter which is activated on the primary side by a control unit (SE', SE") of the driver circuit by means of at least one switch unit (S) of the driver circuit, which converter feeds a rectifier (D1, D2) of the driver circuit from which the illuminant can be supplied, and the driver circuit comprises a measuring circuit (E', E") for indirectly measuring the current on the secondary side of the converter, **characterized in that** the measuring circuit (E', E") for indirectly measuring the current on the secondary side of the converter comprises a transformer (L3_1, L3_3) having at least one primary coil (L3_1) arranged on the secondary side of the converter, wherein the measuring circuit (E', E") comprises an active measuring rectifier (AG, AG') coupled to the secondary coil (L3_3) of the transformer, wherein the control unit (SE', SE") controls rectifier switches (Q11, Q12) of the active measuring rectifier (AG, AG') of the measuring circuit (E', E") as a function of the activation of the switch unit (S).

2. Driver circuit according to Claim 1, wherein a parameter representing the current through the illuminant is fed back to the control unit (SE', SE") from an output of the measuring circuit (E', E"), and in particular the output is connected directly or indirectly to a measurement input of the control unit (SE', SE").

3. Driver circuit according to any one of the preceding claims, wherein the switch unit (S) is a half-bridge or full-bridge inverter.

4. Driver circuit according to any one of the preceding claims, wherein the at least one primary coil (L3_1) is part of a resonant converter, an LLC circuit, a flyback converter, a push-pull converter, a boost converter, or a buck converter.

5. Driver circuit according to any one of the preceding claims, wherein the switch unit (S) comprises at least one switch, in particular a transistor, FET, or MOSFET.

6. Driver circuit according to any one of the preceding claims, wherein the control unit (SE', SE") connects the secondary coil (L3_3) of the transformer to ground by activating a first rectifier switch (Q11) synchronously with an inverter switch (Q2), or by activating a second rectifier switch (Q12) synchronously with another inverter switch (Q1).

7. Driver circuit according to Claim 2, wherein the parameter representing the current through the illuminant is a voltage value which is output at an output of an integrating circuit (I) of the measuring circuit (E', E").

8. Driver circuit according to any one of the preceding claims, wherein the first or the second rectifier switch (Q11/Q12) is activated by the switch unit (S) via an activation signal, and the other rectifier switch (Q12/Q11) is activated by an inverted activation signal from the switch unit (S).

9. Method for measuring a parameter representing the current through an illuminant, preferably at least one LED, wherein
an isolated, clocked converter which is activated on the primary side by a control unit (SE', SE") by means of at least one switch unit (S) feeds a rectifier (D1, D2) from which the illuminant is supplied, and a measuring circuit (E', E") indirectly measures a current on the secondary side of the converter,
**characterized in that** the measuring circuit (E', E") measures the current at a transformer (L3_1, L3_3) having at least one primary coil (L3_1) on the secondary side of the converter and comprises an active measuring rectifier (AG, AG') coupled to the secondary coil (L3_3) of the transformer (L3_1, L3_3), wherein the control unit (SE', SE") controls rectifier switches (Q11, Q12) of the active measuring rectifier (AG, AG') of the measuring circuit (E', E") as a function of the actuation of the switch unit (S).

## Revendications

1. Circuit d'attaque destiné au fonctionnement d'un moyen d'éclairage, de préférence au moins une LED, dans lequel le circuit d'attaque présente un convertisseur cadencé isolé du potentiel, commandé du côté primaire par une unité de commande (SE', SE") du circuit d'attaque au moyen d'au moins une unité de commutation (S) du circuit d'attaque, lequel alimente un redresseur (D1, D2) du circuit d'attaque à partir duquel le moyen d'éclairage peut être alimenté, et le circuit d'attaque présente un circuit de détection (E', E") destiné à la détection indirecte du courant sur le côté secondaire du convertisseur, **caractérisé en ce que** le circuit de détection (E', E") destiné à la détection indirecte du courant du côté secondaire du convertisseur, présente un transformateur (L3_1, L3_3) comprenant au moins un enroulement primaire (L3_1) disposé sur le côté secondaire du convertisseur, le circuit de détection (E', E") présentant un redresseur de détection (AG, AG') actif couplé à un enroulement secondaire (L3_3) du transformateur, l'unité de commande (SE', SE") commandant des commutateurs de redresseur (Q11, Q12) du redresseur de détection (AG, AG") actif du circuit de détection (E', E") en fonction de la commande de l'unité de commutation (S).

2. Circuit d'attaque selon la revendication 1, dans lequel un paramètre représentant le courant traversant le moyen d'éclairage est renvoyé à l'unité de commande (SE', SE"), à partir d'une sortie du circuit de détection (E', E") et, en particulier la sortie est raccordée, directement ou indirectement, à une entrée de mesure de l'unité de commande (SE', SE").

3. Circuit d'attaque selon l'une quelconque des revendications précédentes, dans lequel l'unité de commutation (S) est un inverseur à demi-pont ou à pont complet.

4. Circuit d'attaque selon l'une quelconque des revendications précédentes, dans lequel l'au moins un enroulement primaire (L3_1) fait partie d'un convertisseur à résonance, d'un circuit LLC, d'un convertisseur flyback, d'un convertisseur de flux push-pull, d'un convertisseur élévateur ou d'un convertisseur abaisseur.

5. Circuit d'attaque selon l'une quelconque des revendications précédentes, dans lequel l'unité de commutation (S) présente au moins un commutateur, en particulier un transistor, un FET ou un MOSFET.

6. Circuit d'attaque selon l'une quelconque des revendications précédentes, dans lequel l'unité de commande (SE', SE") relie à la terre l'enroulement secondaire (L3_3) du transformateur par commande d'un premier commutateur de redresseur (Q11) de manière synchrone avec un commutateur d'inverseur (Q2) ou par commande d'un deuxième commutateur de redresseur (Q12) de manière synchrone avec un autre commutateur d'inverseur (Q1).

7. Circuit d'attaque selon la revendication 2,dans lequel le paramètre représentant le courant traversant le moyen d'éclairage est une valeur de tension, laquelle est sortie à une sortie d'un circuit d'intégration (I) du circuit de détection (E', E").

8. Circuit d'attaque selon l'une quelconque des revendications précédentes, dans lequel le premier ou le deuxième commutateur de redresseur (Q11/Q12) est commandé par l'unité de commutation (S) au moyen d'un signal de commande et l'autre commutateur de redresseur (Q12/Q11) est commandé au moyen d'un signal de commande inversé par l'unité de commutation (S).

9. Procédé de détection d'un paramètre représentant le courant circulant à travers un moyen d'éclairage, de préférence au moins une LED,
dans lequel un convertisseur cadencé isolé du potentiel commandé du côté primaire par une unité de commande (SE', SE") au moyen d'au moins une unité de commutation (S) alimente un redresseur (D1, D2) à partir duquel le moyen d'éclairage est alimenté, et un circuit de détection (E', E") détecte indirectement sur le côté secondaire du convertisseur un courant,
**caractérisé en ce que** le circuit de détection (E', E") détecte le courant sur un transformateur (L3_1, L3_3) comportant au moins un enroulement primaire (L3_1) sur le côté secondaire du convertisseur et présente un redresseur de détection (AG, AG') actif couplé à l'enroulement secondaire (L3_3) du transformateur (L3_1, L3_3), l'unité de commande (SE', SE") commandant des commutateurs de redresseur (Q11, Q12) du redresseur de détection (AG, AG") actif du circuit de détection (E', E") en fonction de la commande de l'unité de commutation (S).
